# EUROPEAN PATENT APPLICATION

(11) **EP 4 664 981 A1**
(43) Date of publication of application: **17.12.2025**
(21) Application number: 23920446.4
(22) Date of filing: 09.02.2023
(51) Int. Cl.: H04W 28/02

(54) **WIRELESS COMMUNICATION METHOD, STATION DEVICE, AND ACCESS POINT DEVICE**

(71) Applicant: GUANGDONG OPPO MOBILE TELECOMMUNICATIONS CORP., LTD., Dongguan, Guangdong 523860 (CN)
(72) Inventor: LI, Yapu, Dongguan, Guangdong 523860 (CN); GAO, Ning, Dongguan, Guangdong 523860 (CN)
(74) Representative: Taor, Simon Edward William
(86) International application number: PCT/CN2023/075232
(87) International publication number: WO 2024/164238

(57) **Abstract**

Provided are a wireless communication method, a station device, and an access point device. The method comprises: a station device using a part of resources in first resources to transmit a first service when a first condition is satisfied, wherein the first resources are resources allocated by an access point device for transmitting a physical layer protocol data unit (PPDU), and the latency requirement of data carried in the TB PPDU is lower than the latency requirement of the first service.

## Description

### TECHNICAL FIELD

Embodiments of the disclosure relate to the field of communications, and particularly to a method for wireless communication, a station device and an access point device.

### BACKGROUND

In Wireless Fidelity (Wi-Fi) systems, when performing an uplink Trigger Based (TB) Physical Protocol Data Unit (PPDU) transmission, an access point firstly transmits a trigger frame, and each station device then prepares and transmits the TB PPDU based on parameters indicated in the received trigger frame. Low latency is the goal pursued by the Wi-Fi systems, and how to realize the transmission of low latency services in TB PPDUs is an urgent problem that needs to be solved.

### SUMMARY

The disclosure provides a method for wireless communication, a station device and an access point device. The station device can transmit a low latency service using a resource for transmitting a PPDU, which is beneficial for satisfying the latency requirement for the service.

In a first aspect, a method for wireless communication is provided. The method includes the following operation.

A station device transmits a first service using part of a first resource when a first condition is satisfied.

Herein, the first resource is a resource allocated by an access point device for transmitting a PPDU, and a latency requirement for data carried in the PPDU is lower than a latency requirement for the first service.

In a second aspect, a method for wireless communication is provided. The method includes the following operation.

An access point device transmits first indication information to a station device.

Herein, the first indication information is used for indicating whether the station device is allowed to transmit the first service using a resource for transmitting a PPDU.

In a third aspect, there is provided a station device for performing the method in the above-described first aspect or various implementations thereof.

Specifically, the terminal device includes functional modules for performing the method in the above-described first aspect or the various implementations thereof.

In a fourth aspect, there is provided an access point device for performing the method in the above-described second aspect or various implementations thereof.

Specifically, the network device includes functional modules for performing the method in the above-described second aspect or the various implementations thereof.

In a fifth aspect, there is provided a station device including a processor and a memory. The memory is configured to store a computer program. The processor is configured to call the computer program stored in the memory and run the computer program to perform the method in the above-described first aspect or the various implementations thereof.

In a sixth aspect, there is provided an access point device including a processor and a memory. The memory is configured to store a computer program. The processor is configured to call the computer program stored in the memory and run the computer program to perform the method in the above-described second aspect or the various implementations thereof.

In a seventh aspect, there is provided a chip for performing the method in any one of the above-described first aspect to second aspect or various implementations thereof.

Specifically, the chip includes a processor for calling a computer program from a memory and running the computer program to cause a device installed with the chip to perform the method in any one of the above-described first aspect to second aspect or various implementations thereof.

In an eighth aspect, there is provided a computer readable storage medium for storing computer programs that cause a computer to perform the method in any one of the above-described first aspect to second aspect or various implementations thereof.

In a ninth aspect, there is provided a computer program product including computer program instructions. The computer program instructions cause a computer to perform the method in any one of the above-described first aspect to second aspect or various implementations thereof.

In a tenth aspect, a computer program is provided. The computer program, when executed on a computer, causes the computer to perform the method in any one of the above-described first aspect to second aspect or various implementations thereof.

According to the above-described technical solutions, in an uplink PPDU transmission, a station device can transmit a service with a lower latency requirement using a resource for transmitting a PPDU, which is beneficial for satisfying the latency requirement for the service.

### BRIEF DESCRIPTION OF THE DRAWINGS

FIG. 1 is a diagram of architecture of a communication system provided in an embodiment of the disclosure.
FIG. 2 is a diagram of a frame format of a trigger frame.
FIG. 3 is a format diagram of a special user field of a trigger frame.
FIG. 4 is an interaction diagram of a method for wireless communication provided in an embodiment of the disclosure.
FIG. 5 is a diagram of a division method of time domain resource units provided according to an embodiment of the disclosure.
FIG. 6 is a diagram of another division method of time domain resource units provided according to an embodiment of the disclosure.
FIG. 7 is a diagram of yet another division method of time domain resource units provided according to an embodiment of the disclosure.
FIG. 8 is a diagram of still another division method of time domain resource units provided according to an embodiment of the disclosure.
FIG. 9 is a diagram of a resource preemption method according to an embodiment of the disclosure.
FIG. 10 is a diagram of another resource preemption method according to an embodiment of the disclosure.
FIG. 11 is a format diagram of a common user field of a trigger frame provided in an embodiment of the disclosure.
FIG. 12 is a format diagram of another common user field of a trigger frame provided in an embodiment of the disclosure.
FIG. 13 is a diagram of a resource preemption method according to an embodiment of the disclosure.
FIG. 14 is another diagram of a resource preemption method according to another embodiment of the disclosure.
FIG. 15 is yet another diagram of a resource preemption method according to yet another embodiment of the disclosure.
FIG. 16 is still another diagram of a resource preemption method according to still another embodiment of the disclosure.
FIG. 17 is a block diagram of a station device provided according to an embodiment of the disclosure.
FIG. 18 is a block diagram of an access point device provided according to an embodiment of the disclosure.
FIG. 19 is a block diagram of a communication device provided according to an embodiment of the disclosure.
FIG. 20 is a block diagram of a chip provided according to an embodiment of the disclosure.
FIG. 21 is a block diagram of a communication system provided according to an embodiment of the disclosure.

### DETAILED DESCRIPTION

The technical solutions in the embodiments of the disclosure would be described below in conjunction with the accompanying drawings in the embodiments of the disclosure. It is apparent that the described embodiments are a part of the embodiments of the disclosure, rather than all of the embodiments. Based on the embodiments of the disclosure, all other embodiments obtained by those of ordinary skill in the art without creative effort fall within the scope of protection of the disclosure.

The technical solutions of the embodiments of the disclosure may be applied to various communication systems, such as Wireless Local Area Networks (WLAN), a Wi-Fi, or other communication systems.

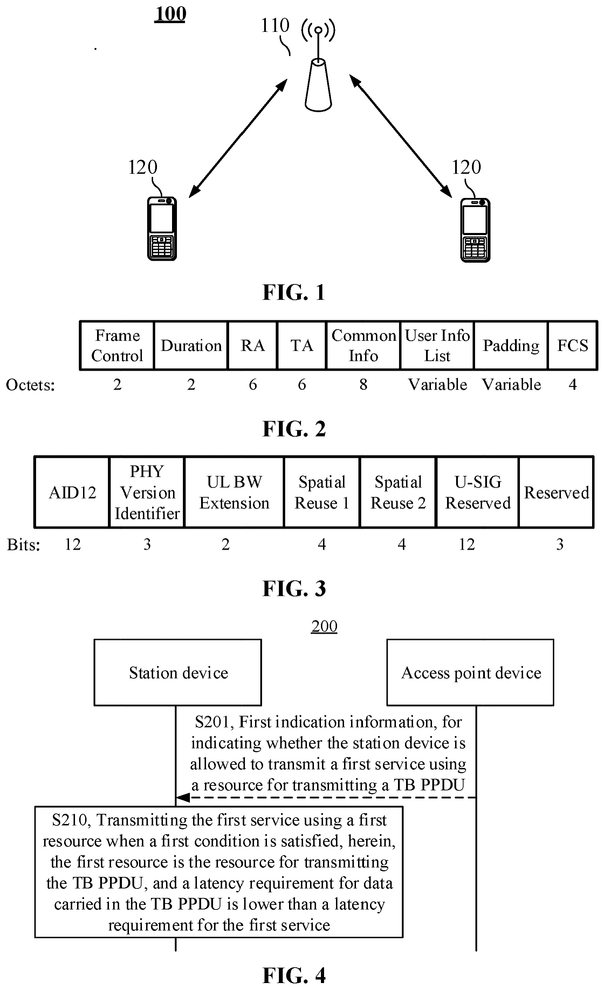

Exemplarily, the communication system 100 applied to the embodiments of the disclosure is illustrated in FIG. 1. The communication system 100 may include an Access Point (AP) 110, and a STATION (STA) 120 accessing a network through the AP 110.

In some scenarios, the AP may be referred to as an AP STA. That is, an AP is also a STA in a sense.

In some scenarios, the STA may be referred to as a non-AP STA.

The communication in the communication system 100 may be a communication between an AP and a non-AP STA, a communication between a non-AP STA and a non-AP STA, or a communication between an STA and a peer STA. The peer STA may refer to a device that communicates peer to peer with the STA, for example, the peer STA may be an AP or a non-AP STA.

AP is equivalent to a bridge connecting a wired network and a wireless network, whose main function is to connect various wireless network clients together and then connect the wireless network to Ethernet. The AP device may be a terminal device with a Wi-Fi chip (such as a mobile phone) or a network device (such as a router).

It should be understood that the role of the STA in the communication system is not absolute. For example, in some scenarios, when the mobile phone is connected to a router, the mobile phone is a non-AP STA; and when the mobile phone serves as a hotspot for other mobile phones, the mobile phone acts as an AP.

The AP and the non-AP STA may be devices applied to the vehicle to everything, an Internet of Things (IoT) node, a sensor, or the like in the IoT, a smart camera, a smart remote controller, a smart water meter, or the like in a smart home, and a sensor in a smart city, or the like

In some embodiments, the non-AP STA may support the 802.11be standard. The non-AP STA may support various current and future 802.11 family WLAN standards, such as 802.11ax, 802.11ac, 802.11n, 802.11g, 802.11b, and 802.11a.

In some embodiments, the AP may be a device that supports the 802.1The standard. The AP may be a device that supports various current and future 802.11 family WLAN standards, such as 802.11ax, 802.11ac, 802.11n, 802.11g, 802.11b, and 802.11a.

In the embodiments of the disclosure, the STA may be a Mobile Phone, a Pad, a computer, a Virtual Reality (VR) device, an Augmented Reality (AR) device, a wireless device in industrial control, a set-top box, a wireless device in self driving, a vehicle communication device, a wireless device in remote medical, a wireless device in a smart grid, a wireless device in transportation safety, a wireless device in a smart city, a wireless device in a smart home, or a wireless communication chip/ASIC/SOC or the like that support WLAN or Wi-Fi technologies.

The frequency bands supportable by the WLAN technologies may include, but are not limited to, low frequency bands (e.g., 2.4GHz, 5GHz, 6GHz), high frequency bands (e.g., 60GHz).

FIG. 1 exemplarily illustrates one AP STA and two non-AP STAs. Alternatively, the communication system 100 may include multiple AP STAs and include the respective number of non-AP STAs, which would not be limited in embodiments of the present disclosure.

It should be understood that a device having a communication function in the network/system in the embodiments of the present disclosure may be referred to as a communication device. Taking the communication system 100 illustrated in FIG. 1 as an example, the communication device may include the access point 110 and the STA 120 having communication functions. The access point 110 and the STA 120 may be specific devices described above, and will not be repeated herein. The communication device may also include other devices in the communication system 100, such as a network controller, a gateway and other network entities, which would not be limited in embodiments of the present disclosure.

It should be understood that the terms "system" and "network" in the present disclosure may usually be used interchangeably. In the disclosure, the term "and/or" refers to only an association relationship for describing associated objects and represents that three relationships may exist. For example, A and/or B may represent three cases: i.e., only A exists, both A and B exist, and only B exists. Furthermore, character "/" in the disclosure usually represents that previous and next associated objects form an "or" relationship.

It should be understood that the term "indication/indicate/indicating" mentioned in the embodiments of the disclosure may be a direct indication, or may be an indirect indication, or may represent existence of an association relationship. For example, A indicates B, which may represent that A directly indicates B, for example, B may be obtained by A; or may represent that A indirectly indicates B, for example, A indicates C, and B may be obtained by C; or may represent that an association relationship exists between A and B.

In the description of the embodiments of the present disclosure, the term "corresponding/correspondence/correspond" may indicate that there are direct or indirect correspondences between two objects, or may indicate that there is an association relationship between the two objects, or may have an indicating and being indicated relationship, a configuring and being configured relationship, or the like.

In the embodiments of the present disclosure, "predefined/predefinition" may be implemented by pre-storing corresponding codes or tables or other means that may be used to indicate relevant information in devices (e.g., including access points and STAs), specific implementations of which are not limited herein. For example, the "predefined" may refer to what is defined in protocol.

For convenience of understanding of the technical solutions of the embodiments of the disclosure, a trigger frame related to the present disclosure will be described.

When performing the uplink Trigger Based (TB) Physical Protocol Data Unit (PPDU) transmission, the AP firstly transmits a trigger frame, and then each non-AP STA prepares and transmits the TB PPDU based on parameters, such as an uplink length (UL Length), an uplink bandwidth (UL BW), a Low-Density Parity Check (LDPC) extra symbol segment, a Pre-Forward Error Correction (Pre-FEC) padding factor, a Packet Extension (PE) disambiguity, a Resource Unit (RU) allocation, an Uplink Forward Error Correction (UL FEC) coding type, an Uplink Ultra-High Reliability (UHR) Modulation and Coding Scheme (MCS) (UL UHR-MCS), or the like, indicated in the received trigger frame.

A trigger frame contains a Common Info field, a User Info List field, and a Padding field. As illustrated in FIG. 2, the Padding field may appear in the trigger frame for extending the frame length, so that the receiving STA has sufficient time to prepare to respond to the PPDU, so as to perform the transmission after the Short InterFrame Space (SIFS) following reception of the trigger frame. The User Info List field consists of one or more User Info fields. The formats of the Common Info field and the User Info field depend on a type of trigger frame. The trigger frame contains three types of User Info fields, including a High Efficiency (HE) Variant User Info field, an Extremely High Throughput (EHT) Variant User Info field and a Special User Info field. The Special User Info field carries the necessary Universal SIGNAL (U-SIG) field of the requested EHT TB PPDU. The Special User Info field is located after the Common Info field in the Trigger frame. An example format of the Special User Info field is illustrated in FIG. 3, where an Association Identifier 12 (AID12) subfield of the Special User Info field should be set to 2007.

In Wi-Fi systems, when performing an uplink TB PPDU transmission, an access point firstly transmits a trigger frame, and then each station device prepares and transmits the TB PPDU based on parameters indicated in the received trigger frame. Low latency is the goal pursued by Wi-Fi systems, and it is an urgent problem that needs to be solved about how to realize the transmission of low latency services in the TB PPDU.

For convenience of understanding of the technical solutions of the embodiments of the disclosure, the technical solutions of the disclosure will be described in detail below with reference to specific embodiments. The above related technologies may be used as alternative solutions and may be combined with the technical solutions of the embodiments of the disclosure in various ways, all of which belong to the scope of protection of the embodiments of the disclosure. The embodiments of the disclosure include at least some of the following.

FIG. 4 is a diagram of a method 200 for wireless communication according to an embodiment of the disclosure. As illustrated in FIG. 4, the method 200 includes the following an operation S210 .

At the operation S210, a station device transmits a first service using a first resource when a first condition is satisfied. The first resource is a resource, allocated by an access point device, for transmitting a PPDU.

In some embodiments, a latency requirement for data carried in the PPDU is lower than a latency requirement for the first service. For example, the first service is a latency sensitive service or a low latency service.

In some embodiments, a priority of the data carried in the PPDU is lower than a priority of the first service.

In some embodiments, the resource for transmitting the PPDU is used to transmit the first service, which may also be expressed as: the resource for transmitting the PPDU is preempted to transmit the first service. This behavior is also referred to as resource preemption in PPDU transmission. This resource preemption behavior is used to ensure timely transmission of a lower latency service arriving in the PPDU transmission, thus the latency requirement for the low latency service can be met.

It should be noted that unless otherwise specified, the resource preemption in the embodiments of the present disclosure refers to that the station device transmits the low latency service using the resource, allocated by the access point device or obtained through contention, for transmitting the PPDU, rather than contending for the resource for transmitting the PPDU among multiple station devices.

In some embodiments, the PPDU may be a TB PPDU or a Multiple Users Physical Protocol Data Unit (MU PPDU), or the like. Hereinafter, the PPDU is a TB PPDU as an example for an explanation, but the present disclosure is not limited thereto. That is, the embodiments of the present disclosure may be applied to resource preemption in the TB PPDU, or may be applied to resource preemption in the MU PPDU. For example, for a non-Orthogonal Frequency Division Multiple Access (non-OFDMA) MU PPDU, each station device may perform the resource preemption on the entire PPDU bandwidth, and then transmits data of the respective station device through different spatial streams.

In some embodiments, the first resource may be allocated by the access point device through a trigger frame. For example, the station device may determine the first resource through a UL Length field, a UL BW field, a RU Allocation field, and/or the like of the trigger frame.

In some embodiments, the trigger frame is used for triggering transmission of the TB PPDU, or may be used for an Uplink (UL) Orthogonal Frequency Division Multiple Access (OFDMA) based Random Access (UORA).

In some embodiments, the station device may be associated with the access point device, or may not be associated with the access point device. That is, the station device may be an associated non-AP STA, or may be an unassociated non-AP STA.

In some embodiments, the first resource is a dedicated resource allocated by the access point device to one station device, or may be a resource allocated to multiple station devices and the multiple station devices may contend for the right to use the first resource. For example, in a UORA scenario, when the access point device does not know that certain station devices have uplink transmission requirements, or when some unassociated access point devices are required to associate with the access point device through uplink transmission, the access point device may allocate a resource to multiple associated station devices, or the access point device may allocate a resource to multiple unassociated station devices, in this case, the station device may be a station device that has contended for and obtained the resource.

In some embodiments, the station device transmits the first service using the first resource, which may include that: the station device transmits the first service using part or all of the first resource. For example, during the PPDU transmission by the station device, the first service arrives, and the station device may transmit the first service using part or all of remaining resources. Specifically, for example, when the first condition is satisfied, the first service is transmitted using part or all of the remaining resources.

In some embodiments, the first resource may include a first time domain resource. The station device transmits the first service using the first resource, which may include that: the station device transmits the first service using the first time domain resource. For example, the station device transmits the first service using part or all of the first time domain resource.

In some embodiments, the first resource may include a first frequency domain resource. The station device transmits the first service using the first resource, which may include that: the station device transmits the first service using the first frequency domain resource. For example, the station device transmits the first service using a frequency domain resource, allocated by the access point device to the station device, for transmitting the TB PPDU.

In some embodiments, the first resource may include a first spatial domain resource. The station device transmits the first service using the first resource, which may include that: the station device transmits the first service using the first spatial domain resource. For example, the station device transmits the first service using a spatial stream allocated by the access point device to the station device.

In some embodiments, a length of the first time domain resource may be determined based on the UL length field.

In some embodiments, the first time domain resource includes N time domain symbols, which may refer to Orthogonal frequency-division multiplexing (OFDM) symbols, where N is a positive integer. The magnitude of the N value may be determined based on an indication of the UL length field.

In some embodiments, the first time domain resource includes X time domain resource units (denoted as T-RUs), where X is a positive integer.

For example, the station device may divide the first time domain resource into X time domain resource units, and each time domain resource unit includes NSYM time domain symbols, where NSYM is a positive integer. That is, each time domain resource unit includes NSYM OFDM symbols), or in other words, a granularity of the T-RU is NSYM. The size of each T-RU is NSYM × TSYM, where TSYM is a duration of an OFDM symbol.

Correspondingly, the access point device may also divide the first time domain resource into X time domain resource units, or the access point device may allocate the time domain resource to the station device at the granularity of the T-RU. For example, the access point device may allocate one or more T-RUs to the station device, and when multiple T-RUs are allocated, the multiple T-RUs may be continuous or discontinuous in the time domain.

In some embodiments, the X time domain resource units may be divided based on multiple discrete time domain symbols. The indexes of the multiple discrete time domain symbols may be predefined or may be indicated by the access point device.

Hereinafter, specific implementations of the time domain resource units will be described with reference to specific embodiments.

First manner: in some embodiments, the time domain resource unit has an identical size for different station devices.

For example, each station device performs the division in a uniform size to obtain the time domain resource units. For example, in one TB PPDU transmission, all station devices triggered by the access point device divide the time domain resource allocated by the access point device into T-RUs of the same size based on the same granularity.

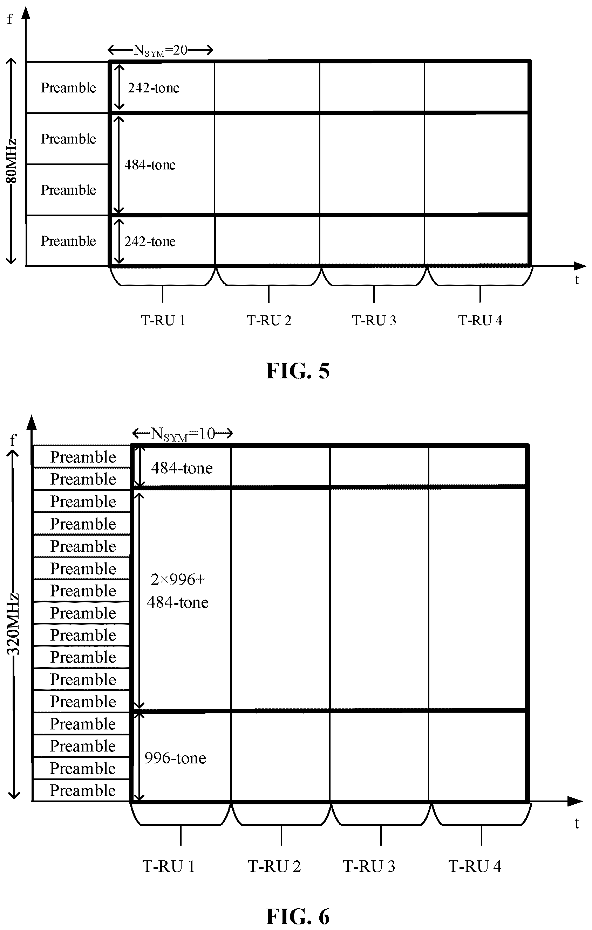

FIG. 5 illustrates a division method of time domain resource units in 80MHz TB PPDU transmission. The sizes of frequency domain resources allocated by the access point device to three station devices are 242-tone, 484-tone, and 242-tone, respectively, and the size of time domain resource is 80 OFDM symbols. In this case, the three station devices may divide the time domain resource into four T-RUs based on the same granularity (e.g., NSYM = 20).

Second manner: a size of the time domain resource unit is related to a bandwidth of the PPDU allocated by the access point device.

For example, the station device may determine the size of the T-RU based on the bandwidth size of the PPDU allocated by the access point device.

In some embodiments, the size of the time domain resource unit and the bandwidth of the PPDU are inversely correlated.

For example, the division may employ a larger granularity (e.g., NSYM = 20, 40, or the like) for the PPDU with a small bandwidth (e.g., the PPDU with 20MHz, 40MHz, or 80MHz), and the division may employ a smaller granularity (e.g., NSYM = 5, 10, 20, or the like ) for the PPDU with a large bandwidth (e.g., the PPDU with 160MHz, 240MHz, 320MHz, 480MHz, or 640MHz).

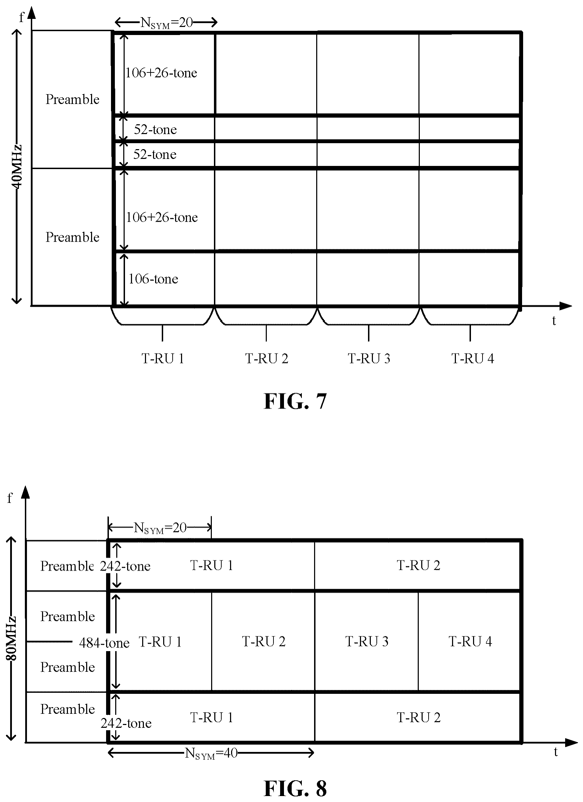

FIGS. 6 and 7 illustrate division methods of time domain resource units in 320MHz PPDU transmission and 40MHz PPDU transmission, respectively. As illustrated in FIG. 6, in transmission of the PPDU with a large bandwidth (for example, 320MHz), the station device may employ a small granularity for division to obtain the resource units, for example, NSYM = 10. As illustrated in FIG. 7, in transmission of the PPDU with a small bandwidth (e.g., 40MHz), the station device may employ a large granularity for division to obtain the resource units, for example, NSYM = 20.

Third manner: a size of the time domain resource unit is related to a size of a frequency domain resource in the first resource.

For example, the station device may determine the size of the T-RU based on the size of the frequency domain resource allocated by the access point device for the station device.

In some embodiments, the size of the time domain resource unit and the size of the frequency domain resource allocated by the access point device for the station device are inversely correlated.

For example, the division may employ a larger granularity (e.g., NSYM = 20, 40, or the like ) for the frequency domain resource with a small size, and the division may employ a smaller granularity (e.g., NSYM = 5, 10, 20, or the like ) for the frequency domain resource with a large size.

In some embodiments, the frequency domain resource with the small size may refer to a frequency domain resource with a size less than or equal to a certain threshold (e.g., 242-tone), for example, 26-tone RU, 52-tone RU, 106-tone RU, 242-tone RU, 52+26-tone Multiple Resource Unit (MRU), and 106+26-tone MRU.

In some embodiments, the frequency domain resource with the large size may refer to a frequency domain resource with a size greater than a certain threshold (e.g., 242-tone), for example, 484-tone RU, 996-tone RU, 2 6-tone RUte, 4 6-tone RUte, 484+242-tone MRU, 996+484-tone MRU, 996+484+242-tone MRU, 2 6+484+242-tone M, 3 6+484+242-to, and/or 3 and/or 42-tone M.

FIG. 8 is a division method of time domain resource units in 80MHz TB PPDU transmission. In the example of FIG. 8, the division may employ a large granularity (e.g., NSYM = 40) for the frequency domain resource with a small size of 242-tone, and the division may employ a small granularity (e.g., NSYM = 20) for the frequency domain resource with a large size of 484-tone.

In some embodiments, when a length of the PPDU (or the length of the first time domain resource) allocated by the access point device to the station device is less than a first length threshold, the station device does not divide the first time domain resource into multiple T-RUs, or does not use the first resource to transmit the first service, or does not perform resource preemption in the current PPDU transmission.

In some embodiments, when the length of the PPDU (or the length of the first time domain resource) allocated by the access point device to the station device is greater than or equal to the first length threshold, the station device may divide the first time domain resource into multiple T-RUs, or may use the first resource to transmit the first service, or may perform resource preemption in the current PPDU transmission.

In some embodiments, the first length threshold may be predefined or may be indicated by the access point device. For example, the first length threshold is indicated in a trigger frame.

In some embodiments of the present disclosure, the method 200 further includes that: the station device transmits a first signal using part of the first time domain resource. The first signal is used for indicating that the first service is transmitted on the first resource. That is to say, the station device notifies the access point device by transmitting the first signal that the station device transmits the first service using the first resource.

In some embodiments, the first signal is a first sequence, such as an Ultra-High Reliability Long Training Field (UHR-LTF) sequence or a specific waveform.

In some embodiments, a location and size of a frequency domain resource occupied by the first signal correspond to a location and size of a frequency domain resource allocated by the access point device for the PPDU transmission. For example, the location and size of the frequency domain resource occupied by the first signal are the same as the location and size of the frequency domain resource allocated by the access point device for the PPDU transmission.

In some embodiments, the first sequence is predefined or the first sequence is configured by the access point device.

In some embodiments, the first service is transmitted after the first signal. For example, transmission of the first service begins on a next time domain resource unit of a time domain resource unit on which the first signal is located.

In some embodiments, an ending location of the first service may be an ending location of the PPDU, or an ending location of the first service may be an ending location of the first time domain resource.

In some implementations, the first signal is transmitted on last K time domain symbols in a time domain resource unit, where K is a positive integer.

For example, when an arrival time of the first service is before the last K time domain symbols in the time domain resource unit, the station device may transmit the first signal on the last K time domain symbols in the time domain resource unit.

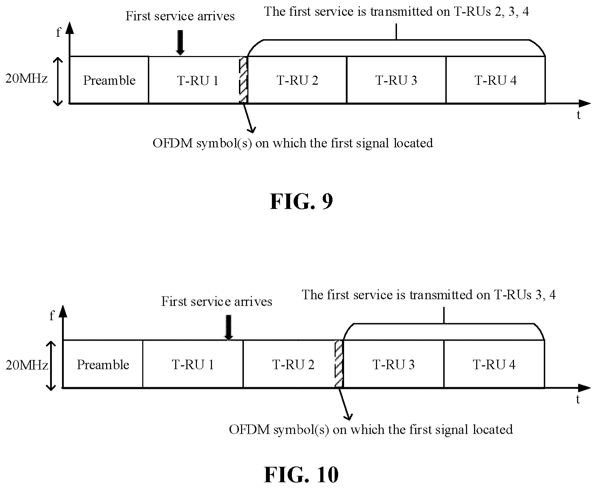

As illustrated in FIG. 9, the first time domain resource includes four T-RUs, which are denoted as T-RU1 to T-RU4, respectively. When the first service arrives before the last K OFDM symbols of the T-RU1, the station device may transmit the first signal on the last K OFDM symbols of the T-RU1, and further transmit the first service on the subsequent T-RUs. For example, the first service is transmitted on T-RU2 to T-RU4.

For another example, when the arrival time of the first service is within the last K time domain symbols of the time domain resource unit, the station device may transmit the first signal on the last K time domain symbols in a next time domain resource unit.

As illustrated in FIG. 10, the first time domain resource includes four T-RUs, which are denoted as T-RU1 to T-RU4, respectively. When the first service arrives within the last K OFDM symbols of the T-RU1, the station device may transmit the first signal on the last K OFDM symbols of the T-RU2, and further transmit the first service on the subsequent T-RUs. For example, the first service is transmitted on T-RU3 and T-RU4.

In some embodiments, since the station device requires a certain preparation time for transmitting the first service, when the arrival time of the first service is before the last K time domain symbols of a time domain unit, it may be considered that the station device has sufficient time to prepare for the first service before the next time domain resource unit, and thus the station device may transmit the first service on the next time domain resource unit. When the arrival time of the first service is within the last K time domain symbols of the time domain unit, it may be considered that the station device has no sufficient time to prepare for the first service before the next time domain resource unit, and thus the station device may transmit the first signal on the next time domain resource unit, and further start to transmit the first service on a time domain resource unit after the time domain resource unit on which the first signal is transmitted.

In other implementations, the first signal occupies K time domain symbols in the first time domain resource, where K is a positive integer.

Optionally, the K time domain symbols may be any K time domain symbols in the first time domain resource, and may be specifically determined based on the arrival time of the first service. For example, the first signal is transmitted upon the arrival of the first service, or the first signal is transmitted when the first service is ready.

In some embodiments, the first service is transmitted after the K time domain symbols occupied by the first signal.

In some embodiments, the first signal and the first service are adjacent to each other, or are separated by M time domain symbols, where M is a positive integer. Optionally, the M time domain symbols may be used for the station device to prepare for the first service.

Optionally, M may be predefined, or M may be indicated by the access point device.

In some embodiments, the first signal is transmitted in a case where remaining resources are sufficient to transmit the first service.

For example, when the arrival time of the first service is before the last K time domain symbols of a time domain resource unit, and time domain resource unit(s) after that time domain resource unit among the X time domain resource units are sufficient to transmit the first service, it may be considered that the remaining resources are sufficient to transmit the first service, otherwise, it may be considered that the remaining resources are insufficient to transmit the first service.

For another example, when the arrival time of the first service is within the last K time domain symbols of a time domain resource unit, and time domain resource unit(s) after the next time domain unit of that time domain resource unit are sufficient to transmit the first service, it may be considered that the remaining resources are sufficient to transmit the first service, otherwise, it may be considered that the remaining resources are insufficient to transmit the first service.

For another example, when the first service arrives on a first time domain symbol, if the remaining time domain symbols among the N time domain symbols are sufficient to transmit the first signal and the first service (the preparation time for the first service needs to be considered), it may be considered that the remaining resources are sufficient to transmit the first service, otherwise, it may be considered that the remaining resources are insufficient to transmit the first service.

In some embodiments, in a case where the remaining resources are insufficient to transmit the first service, the station device may not transmit the first signal and continue performing the current PPDU transmission. That is, the resource preemption is not performed, or the resource preemption for the first service fails.

In some embodiments, the station device may determine, based on an indication from the access point device and/or based on whether the remaining resources of the first resource are sufficient to transmit the first service when the first service arrives, whether the first condition is satisfied or whether the first resource is used to transmit the first service.

For example, when the station device is allowed to transmit the first service using the resource for PPDU transmission by default, the station device may determine, based on whether the remaining resources of the first resource are sufficient to transmit the first service when the first service arrives, whether the first condition is satisfied or whether the first resource is used to transmit the first service, i.e., whether to perform the resource preemption in the PPDU transmission.

For another example, the access point device may indicate whether the station device is allowed to use the resource for the PPDU transmission to transmit the first service. In a case where the access point device indicates that the station device is allowed, the station device may determine whether the first condition is satisfied or whether the first resource is used to transmit the first service based on whether the remaining resources of the first resource are sufficient to transmit the first service when the first service arrives. Optionally, In a case where the access point device indicates that the station device is not allowed, it is determined that the first condition is not satisfied or the first service is not transmitted using the first resource, that is, the resource preemption is not performed in the PPDU transmission.

Therefore, in some embodiments, the first condition is satisfied, which may include at least one of: the access point device allows the station device to transmit the first service using the resource for transmitting the PPDU; or when the first service arrives, remaining resources in the first resource are sufficient to transmit the first service or sufficient to transmit the first signal and the first service.

In some embodiments, the remaining resources in the first resource are sufficient to transmit the first service, which includes that: when an arrival time of the first service is before last K time domain symbols in a time domain resource unit, time domain resource unit(s) after the time domain resource unit are sufficient to transmit the first service; or when an arrival time of the first service is within last K time domain symbols in a time domain resource unit, time domain resource unit(s) after a next time domain unit of the time domain resource unit are sufficient to transmit the first service.

In some embodiments of the present disclosure, the method 200 further includes an operation S201.

At the operation S201, the station device receives first indication information transmitted by the access point device. The first indication information is used for indicating whether the station device is allowed to transmit the first service using the resource for transmitting the PPDU, or indicating whether the station device is allowed to perform the resource preemption in the PPDU transmission.

In some embodiments, the first indication information is transmitted through a trigger frame. The trigger frame is used to trigger transmission of the PPDU or a UORA.

In some embodiments, the first indication information is carried in a common information field (i.e., Common Info field) of the trigger frame.

In this case, whether to allow resource preemption is not distinguished among station devices, that is, all station devices are either allowed or not allowed.

For example, a newly added field in the Common Info field or an existing field in the Common Info field is used to indicate whether the resource preemption is allowed to be performed in the PPDU transmission, or indicate whether the resource preemption is enabled.

Alternatively, the first indication information may be carried through 1 bit.

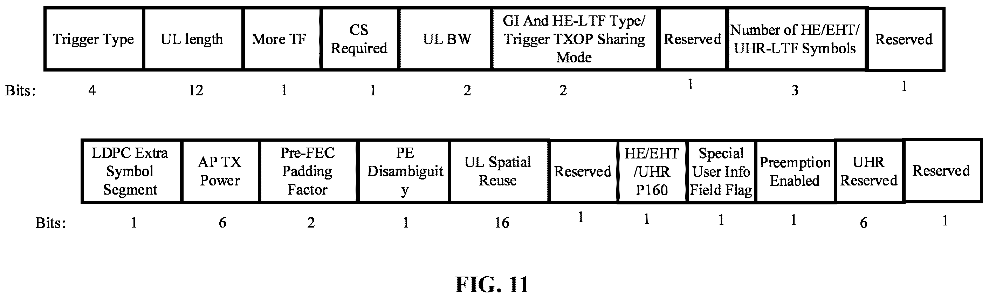

FIG. 11 illustrates a format diagram of a Common Info field of a trigger frame. As illustrated in FIG. 11, the Common Info field may include a Preemption Enabled field for indicating whether the resource preemption is allowed to be performed in PPDU transmission, or indicating whether the resource preemption is enabled.

Exemplarily, the Preemption Enabled field is set to 1 for indicating that the resource preemption is allowed, otherwise, indicating that the resource preemption is not allowed.

Exemplarily, the Preemption Enabled field is set to 0 for indicating that the resource preemption is allowed, otherwise, indicating that the resource preemption is not allowed.

In some embodiments, the first indication information is carried in a user information field (i.e., User Info field) of the trigger frame. For example, the first indication information is carried in an UHR variant User Info field.

In this case, whether to allow the resource preemption in the PPDU transmission may be indicated for an individual station device. For example, the access point device may indicate whether to allow the station device to perform the resource preemption in the PPDU transmission by setting the AID12 field in the UHR variant User Info field as the AID of the station device. Optionally, whether to allow the resource preemption in the PPDU transmission may be indicated for an associated STA and an unassociated STA. For example, the access point device may indicate whether to allow the associated STA to perform the resource preemption in the PPDU transmission by setting the AID12 field in the UHR variant User Info field to 0, and indicate whether to allow the unassociated STA to perform the resource preemption in the PPDU transmission by setting the AID12 field in the UHR variant User Info field to 2045.

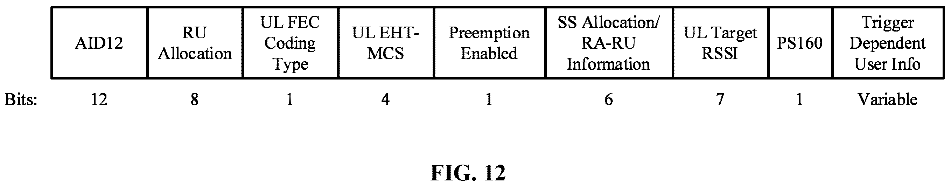

FIG. 12 illustrates a format diagram of a User Info field of a trigger frame. As illustrated in FIG. 12, the User Info field may include a Preemption Enabled field for indicating whether the station device indicated by the AID12 field of the User Info field is allowed to perform the resource preemption in the PPDU transmission, or indicating whether the resource preemption is enabled for the station device indicated by the AID12 field of the User Info field. Exemplarily, the Preemption Enabled field is set to 1 for indicating that the resource preemption is allowed, otherwise, indicating that the resource preemption is not allowed. Exemplarily, the Preemption Enabled field is set to 0 for indicating that the resource preemption is allowed, otherwise, indicating that the resource preemption is not allowed.

In some embodiments, when the AID12 field of the UHR variant User Info field is set to 0, if the Preemption Enabled field indicates that the resource preemption is allowed, the associated STA successfully contending for the frequency domain resource may perform the resource preemption to transmit the first service when the first service arrives during the PPDU transmission. For example, the resource preemption is performed when the first condition is satisfied. Optionally, if the Preemption Enabled field indicates that the resource preemption is not allowed, the associated STA successfully contending for the frequency domain resource does not perform the resource preemption when the first service arrives during the PPDU transmission.

In some embodiments, when the AID12 field of the UHR variant User Info field is set to 2045, if the Preemption Enabled field indicates that the resource preemption is allowed, the unassociated STA successfully contending for the frequency domain resource may perform the resource preemption to transmit the first service when the first service arrives during the PPDU transmission. For example, the resource preemption is performed when the first condition is satisfied. Optionally, if the Preemption Enabled field indicates that the resource preemption is not allowed, the unassociated STA successfully contending for the frequency domain resource does not perform the resource preemption when the first service arrives during the PPDU transmission.

In some embodiments, when the access point device allows a station device to perform the resource preemption in the PPDU transmission, the station device may determine a first time domain resource based on an indication in the trigger frame, divide the first time domain resource into multiple T-RUs, and prepare the PPDU. When the PPDU is transmitted, the station device may determine whether remaining resources are sufficient to transmit the first service if the first service occurs. If sufficient, the station device may prepare and transmit the first service on the remaining resources, and transmit the first signal on last K OFDM symbols of the previous T-RU of the first T-RU for transmitting the first service. Herein, the location and size of the frequency domain resource occupied by the first signal correspond to the location and size of the frequency domain resource occupied by the data. For example, the transmitted first signal is a UHR-LTF sequence with a duration equal to K first time lengths, where the first time length equals to a duration of a OFDM symbol plus a Guard Interval (GI).

Correspondingly, the access point device may also divide the first time domain resource into multiple T-RUs in the same manner as the station device, and detect whether the last K OFDM symbols of each T-RU carry the first signal (e.g., the UHR-LTF sequence with the duration equal to K first time lengths). If it is detected that the last K OFDM symbols of a T-RU carry the first signal, it means that the first service starts from the next T-RU of the T-RU.

In other embodiments, the station device may continue transmitting the PPDU when the access point device does not allow the station device to perform resource preemption in the PPDU transmission or when the station device determines that the remaining resources are insufficient to transmit the first service.

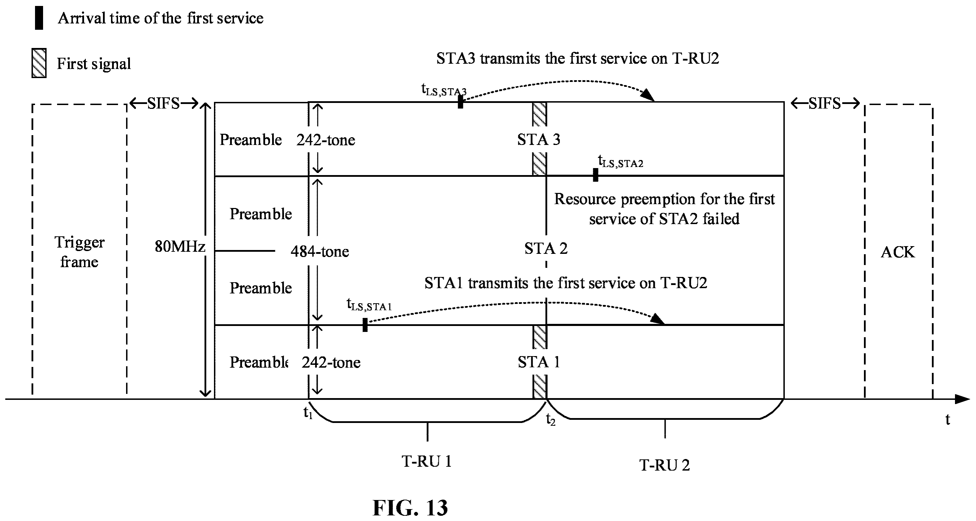

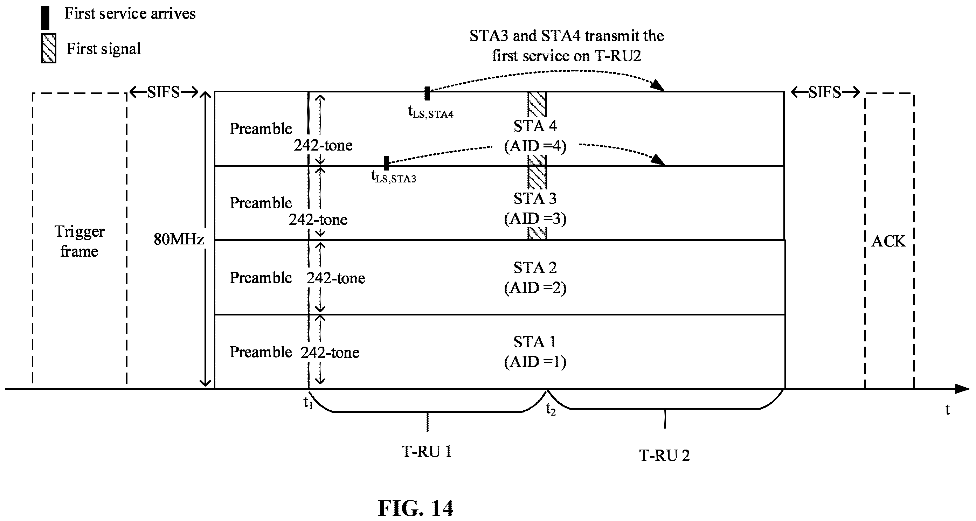

Hereinafter, a specific implementation of the resource preemption in an uplink TB PPDU will be described with reference to FIGS. 13 and 14. In the example of FIG. 13, whether to allow the resource preemption is indicated in the Common Info field. In the example of FIG. 14, whether to allow the resource preemption is indicated in the User Info field.

FIG. 13 illustrates a flow of an AP requesting an uplink TB PPDU transmission. Specifically, the AP transmits a Trigger frame for requesting 80MHz TB PPDU transmission from associated STA1, STA2, and STA3, and the frequency domain resources allocated to the STA1, STA2, and STA3 by the AP are a 242-tone F-RU, a 484-tone F-RU and a 242-tone F-RU, respectively. When the AP indicates in the Common Info field of the Trigger frame that the resource preemption is allowed, STA1, STA2, and STA3 divide the allocated time domain resource into two T-RUs (i.e., T-RU1 and T-RU2) based on the T-RU division manner. STA1, STA2, and STA3 prepare and transmit the original TB PPDU. In the uplink TB PPDU transmission, STA1, STA2, and STA3 have the first service arriving at t_{LS,STA1}, t_{LS,STA2}, and t_{LS,STA3}, respectively. When the arrival time of the respective first service of the STA1 and the STA3 is before the last K OFDM symbols of the T-RU1 and the T-RU2 is sufficient to transmit the first service, the STA1 and the STA3 transmit the first signal on the last K OFDM symbols of the T-RU1, and transmit the first service on the T-RU2, that is, the resource preemption for the first service is successful. The arrival time of the first service of the STA2 is at the T-RU2, since there is no remaining T-RU to transmit the first service, the resource preemption for the first service of the STA 2 fails.

The AP receives the TB PPDU, and divides the time domain resource into two T-RUs in the same manner as the STAs. When detecting that the last K OFDM symbols of the T-RU1 of the STA1 and the last K OFDM symbols of the T-RU1 of the STA3 carry the first signal, the AP determines that the first service is transmitted on the T-RU2. When detecting that there is no first signal on the T-RUs of STA2, the AP determines that STA2 has no first service but normal data.

FIG. 14 illustrates another flow of an AP requesting an uplink TB PPDU transmission. The AP transmits a Trigger frame for requesting 80MHz TB PPDU transmission from associated STA1, STA2, STA3, and STA4 (whose AIDs are 1 to 4, respectively). The Trigger frame contains 4 UHR variant User Info fields. The values of the AID12 fields in the 4 UHR variant User Info fields are 1, 2, 3, and 4, respectively. The frequency domain resources allocated to the STAs 1 to 4 are all 242-tone F-RU. The AP indicates in the UHR variant User Info fields where the values of AID12 is 1 and 2 that the resource preemption is not allowed, and indicates in the UHR variant User Info fields where the values of AID12 is 3 and 4 that the resource preemption is allowed.

After receiving the Trigger frame, STA1 and STA2 determine that the resource preemption is not allowed, and then STA1 and STA2 prepare and transmit the uplink TB PPDU based on the existing procedure. After receiving the Trigger frame, STA3 and STA4 determine that the resource preemption is allowed, and then STA3 and STA4 divide the allocated time domain resource into multiple T-RUs (e.g., two T-RUs). In the uplink TB PPDU transmission, STA3 and STA4 have the first service arriving at t_{LS,STA3} and t_{LS,STA4}, respectively. When the arrival time of the respective first service of the STA3 and the STA4 is before the last K OFDM symbols of the T-RU1 and the remaining T-RU2 is sufficient to transmit the first service, the STA3 and the STA4 transmit the first signal on the last K OFDM symbols of the T-RU1, and transmit the first service on the T-RU2, that is, the resource preemption is successful.

The AP receives the TB PPDU, and divides the time domain resource into two T-RUs in the same manner as the STAs. When detecting that the last K OFDM symbols of the T-RU1 of the STA3 and the last K OFDM symbols of the T-RU1 of the STA4 carry the first signal, the AP determines that the first service is transmitted on the T-RU2. Since STA1 and STA2 are not allowed to perform the resource preemption, the AP receives the TB PPDU based on the existing procedure.

UORA is a multi-user uplink random access mechanism based on the Trigger frame. The difference between the UORA and the traditional TB PPDU transmission is that under the UORA mechanism, the AP may allocate at least a resource for multiple STAs to contend for.

For example, the AP indicates, by setting the AID12 of the UHR variant User Info field to 0, that one or more consecutive resource units for random access (RA-RU) are allocated to an associated STA through the UHR variant User Info field. Optionally, the AP indicates, by setting the AID12 of the UHR variant User Info field to 2045, that one or more consecutive resource units for random access (RA-RU) are allocated to an unassociated STA through the UHR variant User Info field. After successfully contending for a RU, each STA may transmit the uplink TB PPDU on the corresponding RU.

It should be noted that if the non-AP STA is the intended recipient of the UHR variant User Info field in the Trigger frame (e.g. the AID12 sub-field equals to the AID of the non-AP STA), the non-AP STA is not allowed to contend for the RA-RU allocated by the UHR variant User Info field whose AID12 is set to 0 or 2045.

In some embodiments, UORA includes, but is not limited to, the following scenarios: (1) the AP is unaware that some non-AP STAs have uplink transmission requirements; (2) Some unassociated non-AP STAs wish to associate with an AP through uplink transmission.

In some embodiments, in UORA, when the access point device allows the station device to perform the resource preemption, the station device may decode the AID and the RU allocation information of the UHR variant User Info field in the trigger frame. Further, the associated or unassociated station device successfully competing for the resource and the station device allocated with a fixed resource may divide the determined time domain resource into multiple T-RUs, and prepare PPDUs. When the PPDU is transmitted, the station device may determine whether remaining resources are sufficient to transmit the first service if the first service occurs. If sufficient, the station device may prepare and transmit the first service on the remaining resources, and transmit the first signal on last K OFDM symbols of the previous T-RU of the first T-RU for transmitting the first service. Herein, the location and size of the frequency domain resource occupied by the first signal correspond to the location and size of the frequency domain resource occupied by the data. For example, a UHR-LTF sequence with a duration equal to K first time lengths is transmitted, where the first time length equals to a duration of a OFDM symbol plus a GI.

Correspondingly, the access point device may also divide the allocated time domain resource into multiple T-RUs in the same manner as the station devices, and detect whether the last K OFDM symbols of each T-RU carry the first signal (e.g., the UHR-LTF sequence with the duration equal to K first time lengths). If the last K OFDM symbols of a T-RU carry a first signal, it means that the first service starts from the next T-RU of the T-RU.

In other embodiments, the station device may continue transmitting the PPDU when the access point device does not allow the station device to perform the resource preemption or when the station device determines that the remaining resources are insufficient to transmit the first service.

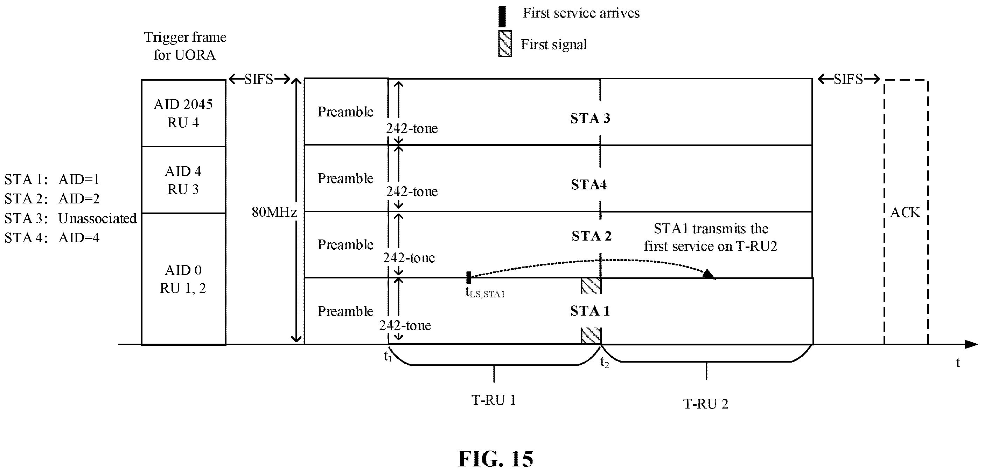

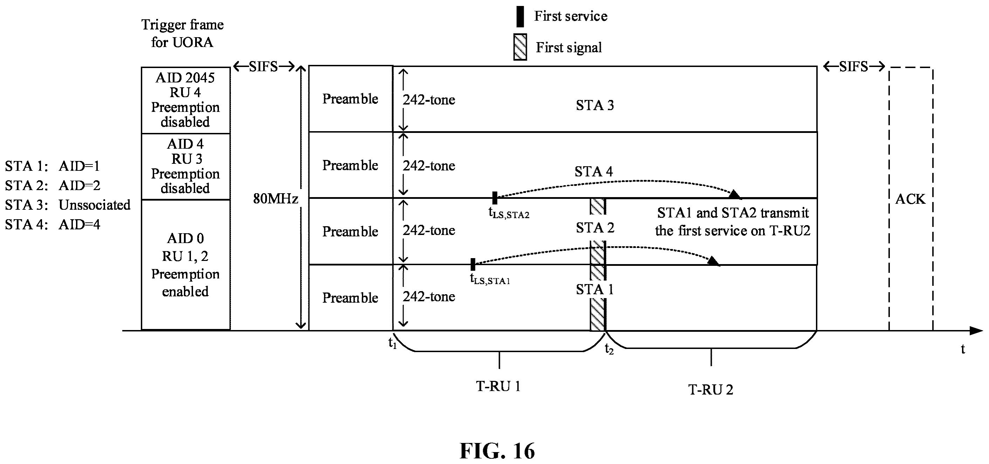

Hereinafter, a specific implementation of the resource preemption in UORA will be described with reference to FIGS. 15 and 16. In the example of FIG. 15, whether to allow the resource preemption is indicated in the Common Info field. In the example of FIG. 16, whether to allow the resource preemption is indicated in the User Info field.

FIG. 15 illustrates a flow of an AP requesting an uplink TB PPDU transmission under the UORA mechanism. The AP transmits a Trigger frame for requesting 80MHz TB PPDU transmission. There are 4 STAs in the current network, among which STA1, STA2, and STA4 are associated STAs of the AP whose AID12 values are 1, 2, and 4 respectively, and STA3 is an unassociated STA of the AP. The AP indicates in the Common Info field of the Trigger frame that the resource preemption is allowed. The Trigger frame includes 3 UHR variant User Info fields, and the AID12 values of the 3 UHR variant User Info fields are 0, 4, 2045, respectively. The RU allocation in the UHR variant User Info field with AID12 equals to 0 is used to allocate 242-tone RU1 and 242-tone RU2, for the associated STAs to contend for. The RU allocation in the UHR variant User Info field with AID12 equals to 4 is used to allocate 242-tone RU3, only for the STA4. The RU allocation in the UHR variant User Info field with AID12 equals to 2045 is used to allocate 242-tone RU4 (with the number of the RA-RU being 1), for the unassociated STA to contend for. The associated STA1 and STA2 obtain 242-tone RU1 and 242-tone RU2, respectively, through contention. STA4 is assigned a fixed 242-tone RU3. The unassociated STA3 obtains 242-tone RU4 through contention.

Since the AP indicates in the Common Info field of the Trigger frame that the resource preemption is allowed, the STAs 1 to 4 divide the obtained time domain resource into two T-RUs, and further prepare and transmit the TB PPDUs. In the uplink TB PPDU transmission, STA1 has the first service arriving at t_{LS,STA2}, since the arrival time of the first service of the STA1 is before the last n OFDM symbols of the T-RU1 and the T-RU2 is sufficient to transmit the first service, the STA1 transmits the first signal on the last K OFDM symbols of the T-RU1, and transmits the first service on the T-RU2, that is, the resource preemption is successful. The STAs 2 to 4 have no first service arrival and transmit normal data.

Correspondingly, the AP receives the TB PPDU, and divides the time domain resource into two T-RUs in the same manner as the STAs. When detecting that the last K OFDM symbols of the T-RU1 of the STA1 carry the first signal, the AP determines that the first service is transmitted on the T-RU2. When detecting that there is no first signal on the T-RUs of STAs 2 to 4, the AP determines that the STAs 3 to 4 do not transmit the first service but transmit normal data.

FIG. 16 illustrates a flow of an AP requesting an uplink TB PPDU transmission under the UORA mechanism. The AP transmits a Trigger frame for requesting 80MHz TB PPDU transmission. There are 4 STAs in the current network, among which STA1, STA2, and STA4 are associated STAs of the AP whose AID12 values are 1, 2, and 4 respectively, and STA3 is an unassociated STA of the AP. The Trigger frame includes 3 UHR variant User Info fields, and the AID values of the 3 UHR variant User Info fields are 0, 4, 2045, respectively. The AP indicates in the UHR variant User Info field with AID12 equals to 0 that the resource preemption is allowed, and the RU allocation is used to allocate 242-tone RU1 and 242-tone RU2, for the associated STAs to contend for. The AP indicates in the UHR variant User Info field with AID12 equals to 4 that the resource preemption is not allowed, and the RU allocation is used to allocate 242-tone RU3, only for the STA4. The AP indicates in the UHR variant User Info field with AID12 equals to 2045 that the resource preemption is not allowed, and the RU allocation is used to allocate 242-tone RU4 (the number of the RA-RU is 1), for the unassociated STA to contend for. The associated STA1 and STA2 obtain 242-tone RU1 and 242-tone RU2, respectively, through contention. STA4 is assigned a fixed 242-tone RU3. The unassociated STA3 obtains 242-tone RU4 through contention.

Since the AP indicates that the STA3 and the STA4 are not allowed for the preemption mechanism, the STA3 and the STA4 prepare and transmit the uplink TB PPDU based on the existing procedure. In the uplink TB PPDU transmission, STA1 and STA2 have the first service arriving at t_{LS,STA1} and t_{LS,STA2}, respectively, since the arrival time of the respective first service of the STA1 and the STA2 is before the last K OFDM symbols of the T-RU1 and the T-RU2 is sufficient to transmit the first service, the STA1 and the STA2 set the last K OFDM symbols of the T-RU1 to carry the first signal, and transmits the first service on the T-RU2, that is, the preemption is successful.

Correspondingly, the AP receives the TB PPDU, and divides the time domain resource into two T-RUs in a consistent manner with the STAs. When detecting that the last K OFDM symbols of the T-RU1 of the STA1 and the last K OFDM symbols of the T-RU1 of the STA2 carry the first signal, the AP determines that the respective first service is transmitted on the T-RU2. Since STA 3 and STA 4 are not allowed to perform the resource preemption, the AP receives data based on the existing procedure.

In summary, in the embodiments of the present disclosure, in the uplink PPDU transmission, the station device can transmit a service with a lower latency requirement using the resource for transmitting the PPDU, which is beneficial for satisfying the latency requirement for the service.

For example, when the remaining resources at the time of arrival of a service are sufficient to transmit the service, the service is transmitted, that is, the resource preemption is performed. Otherwise, the service is not transmitted, that is, no resource preemption is performed.

In some implementations, before transmitting the service, the station device may transmit, on the resource, a first signal for indicating that the low latency service is transmitted on the resource.

In some implementations, the station device may divide the time domain resource allocated by the access point device into multiple time domain resource units.

In some implementations, the first signal is transmitted on last K time domain symbols in a time domain resource unit.

In some implementations, the low latency service starts to be transmitted on a next time domain resource unit of the time domain resource unit on which the first signal is transmitted.

In some implementations, whether the station device performs the resource preemption may be based on an indication of the access point device. For example, the access point device may indicate, in the trigger frame, whether the station device is allowed to perform the resource preemption.

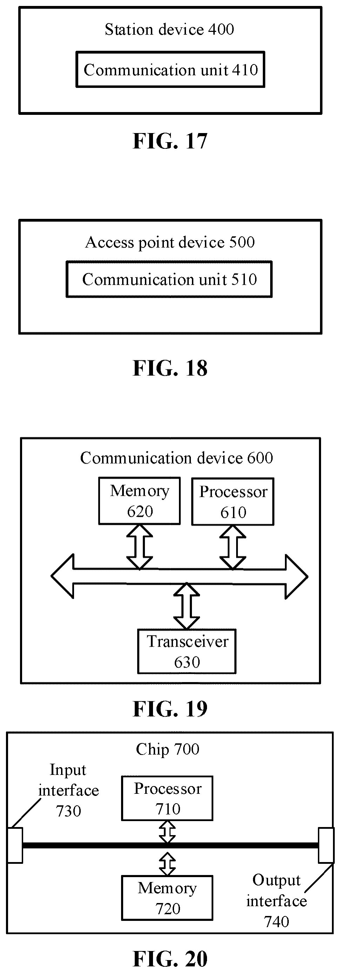

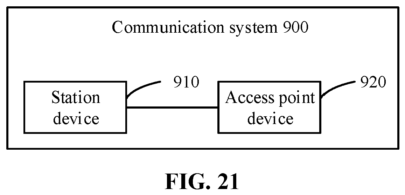

Hereinbefore, the method embodiments of the present disclosure are described in detail with reference to FIGS. 4 to 16. Hereinafter, the apparatus embodiments of the present disclosure are described in detail with reference to FIGS. 17 to 21. It should be understood that the apparatus embodiments and the method embodiments correspond to each other, and similar descriptions may be made with reference to the method embodiments.

FIG. 17 illustrates a block diagram of a station device 400 according to an embodiment of the present disclosure. As illustrated in FIG. 17, the station device 400 includes a communication unit 410.

The communication unit 410 is configured to transmit a first service using a first resource when a first condition is satisfied. The first resource is a resource, allocated by an access point device, for transmitting a PPDU, and a latency requirement for data carried in the PPDU is lower than a latency requirement for the first service.

In some embodiments, the first resource includes a first time domain resource, and the communication unit 410 is further configured to: transmit the first service using part of the first time domain resource.

In some embodiments, the first time domain resource includes X time domain resource units, where X is a positive integer.

In some embodiments, the first time domain resource includes N time domain symbols. Each of the time domain resource units includes at least one time domain symbol.

In some embodiments, the time domain resource unit has the same size for different station devices.

In some embodiments, a size of the time domain resource unit is related to a bandwidth of the PPDU allocated by the access point device.

In some embodiments, a size of the time domain resource unit is related to a size of a frequency domain resource in the first resource.

In some embodiments, a length of the first time domain resource is greater than or equal to a first length threshold.

In some embodiments, the communication unit 410 is further configured to: transmits a first signal using part of the first time domain resource. The first signal is used for indicating that the first service is transmitted on the first resource.

In some embodiments, the first signal is used to indicate that the first service is transmitted on a next time domain resource unit of a time domain unit on which the first signal is located.

In some embodiments, the first signal is a first sequence.

In some embodiments, the first sequence is predefined or the first sequence is configured by the access point device.

In some embodiments, the first signal is transmitted on last K time domain symbols in a time domain resource unit of the first time domain resource, where K is a positive integer.

In some embodiments, when an arrival time of the first service is before the last K time domain symbols in the time domain resource unit, the first signal is transmitted on the last K time domain symbols in the time domain resource unit. Optionally, when the arrival time of the first service is within the last K time domain symbols in the time domain resource unit, the first signal is transmitted on last K time domain symbols in a next time domain resource unit of the time domain resource unit.

In some embodiments, the first signal occupies K time domain symbols in the first time domain resource, where K is a positive integer.

In some embodiments, the first service is transmitted after the K time domain symbols occupied by the first signal.

In some embodiments, the first condition is satisfied, which includes at least one of: the access point device allows the station device to transmit the first service using the resource for transmitting the PPDU; or remaining resources of the first resource are sufficient to transmit the first signal and the first service when the first service arrives.

In some embodiments, the remaining resources of the first resources are sufficient to transmit the first signal and the first service, which includes: when an arrival time of the first service is before last K time domain symbols in a time domain resource unit, time domain resource unit(s) after the time domain resource unit are sufficient to transmit the first service; or when an arrival time of the first service is within last K time domain symbols in a time domain resource unit, time domain resource unit(s) after a next time domain unit of the time domain resource unit are sufficient to transmit the first service.

In some embodiments, the communication unit 410 is further configured to receive first indication information transmitted by the access point device. The first indication information is used for indicating whether the station device is allowed to transmit the first service using the resource for transmitting the PPDU.

In some embodiments, the first indication information is transmitted through a trigger frame.

In some embodiments, the first indication information is carried in a Common Info field of the trigger frame.

In some embodiments, the first indication information is carried in a User Info field of the trigger frame.

In some embodiments, the trigger frame is used for triggering transmission of the PPDU, or for an UORA.

Optionally, in some embodiments, the above-described communication unit may be a communication interface or a transceiver, or the communication unit may be an input/output interface of a communication chip or a system-on-chip (SOC).

It should be understood that the station device 400 according to the embodiment of the present disclosure may correspond to the station device in the method embodiments of the present disclosure, and the above-described and other operations and/or functions of each unit in the station device 400 aim to realize the corresponding processes of the station device in the method 200 illustrated in FIGS. 4 to 16, which are not elaborated here for the sake of brevity.

FIG. 18 is a block diagram of an access point device according to an embodiment of the present disclosure. The access point device 500 of FIG. 18 includes a communication unit 510.

The communication unit 510 is configured to transmit first indication information to a station device. The first indication information is used for indicating whether the station device is allowed to transmit a first service using a resource for transmitting a PPDU.

In some embodiments, the first indication information is transmitted through a trigger frame.

In some embodiments, the first indication information is carried in a Common Info field of the trigger frame.

In some embodiments, the first indication information is carried in a User Info field of the trigger frame.

In some embodiments, the trigger frame is used for triggering transmission of the PPDU or for an UORA.

In some embodiments, the access point device further includes a processing unit, configured to determine whether the station device transmits the first service on a first resource based on whether a first signal is received on the first resource. The first resource is a resource, allocated by the access point device, for transmitting the PPDU, and a latency requirement for data carried in the PPDU is lower than a latency requirement for the first service.

In some embodiments, the processing unit is further configured to: determine that the station device transmits the first service on the first resource when the first signal is received on the first resource; or determine that the station device does not transmit the first service on the first resource when the first signal is not received on the first resource.

In some embodiments, the first resource includes a first time domain resource, the first time domain resource includes X time domain resource units, where X is a positive integer.

In some embodiments, the first time domain resource includes N time domain symbols. Each of the time domain resource units includes at least one time domain symbol.

In some embodiments, a length of the first time domain resource is greater than or equal to a first length threshold.

In some embodiments, the time domain resource unit has the same size for different station devices.

In some embodiments, a size of the time domain resource unit is related to a bandwidth of the PPDU allocated by the access point device.

In some embodiments, a size of the time domain resource unit is related to a size of a frequency domain resource in the first resource.

In some embodiments, the first signal is transmitted on last K time domain symbols in a time domain resource unit.

In some embodiments, the first service is transmitted on time domain resource unit(s) after a time domain resource unit on which the first signal is located.

In some embodiments, the first signal occupies K time domain symbols in the first time domain resource.

In some embodiments, the first service is transmitted after the K time domain symbols occupied by the first signal.

In some embodiments, the first signal is a first sequence.

Optionally, in some embodiments, the above-described communication unit may be a communication interface or a transceiver, or the communication unit may be an input/output interface of a communication chip or a system-on-chip. The above-described processing unit may be one or more processors.

It should be understood that the access point device 500 according to the embodiment of the present disclosure may correspond to the access point device in the method embodiments of the present disclosure, and the above-described and other operations and/or functions of each unit in the access point device 500 aim to realize the corresponding processes of the access point device in the method 200 illustrated in FIGS. 4 to 16, which are not elaborated here for the sake of brevity.

FIG. 19 is a structural diagram of a communication device 600 provided in an embodiment of the present disclosure. The communication device 600 illustrated in FIG. 19 includes a processor 610. The processor 610 may call the computer program stored in a memory and run the computer program to perform the methods in the embodiments of the present disclosure.

Optionally, as illustrated in FIG. 6, the communication device 600 may further include a memory 620. The processor 610 may call the computer program stored in the memory 620 and run the computer program to perform the methods in the embodiments of the present disclosure.

The memory 620 may be a separate device independent of the processor 610 or may be integrated in the processor 610.

Optionally, as illustrated in FIG. 6, the communication device 600 may further include a transceiver 630, and the processor 610 may control the transceiver 630 to communicate with other devices. Specifically, the processor 610 may control the transceiver 630 to transmit information or data to other devices, or receive information or data from other devices.

The transceiver 630 may include a transmitter and a receiver. The transceiver 630 may further include one or more antennas.

Optionally, the communication device 600 may specifically be the access point device in the embodiments of the present disclosure, and the communication device 600 may implement corresponding processes implemented by the access point device in various methods of the embodiments of the present disclosure, which are not elaborated here for the sake of brevity.

Optionally, the communication device 600 may specifically be the station device in the embodiments of the present disclosure, and the communication device 600 may implement corresponding processes implemented by the station device in various methods of the embodiments of the present disclosure, which are not elaborated here for the sake of brevity.

FIG. 7 is a structural diagram of a chip according to an embodiment of the present disclosure. The chip 700 illustrated in FIG. 7 includes a processor 710, configured to invoke and run a computer program from a memory to perform the methods in the embodiments of the present disclosure.

Optionally, as illustrated in FIG. 7, the chip 700 may further include a memory 720, and the processor 710 may invoke and run a computer program from the memory 720 to perform the methods in the embodiments of the present disclosure.

The memory 720 may be a separate device independent of the processor 710 or may be integrated in the processor 710.

Optionally, the chip 700 may further include an input interface 730. The processor 710 may control the input interface 730 to communicate with other devices or chips. Specifically, the processor 710 may control the input interface 730 to acquire information or data transmitted by other devices or chips.

Optionally, the chip 700 may further include an output interface 740. The processor 710 may control the output interface 740 to communicate with other devices or chips. Specifically, the processor 710 may control the input interface 730 to output information or data to other devices or chips.

Optionally, the chip may be applied to the access point device in the embodiments of the present disclosure, and the chip may perform corresponding processes performed by the access point device in various methods of the embodiments of the present disclosure, which are not elaborated here for the sake of brevity.

Optionally, the chip may be applied to the station device in the embodiments of the present disclosure, and the chip may perform corresponding processes performed by the station device in various methods of the embodiments of the present disclosure, which are not elaborated here for the sake of brevity.

It should be understood that the chip mentioned in the embodiments of the present disclosure may also be referred to as a system-level chip, a system chip, a chip system, or a system-on-chip chip, or the like.

FIG. 8 is a block diagram of a communication system 900 provided in an embodiment of the present disclosure. As illustrated in FIG. 8, the communication system 900 includes a terminal device 910 and an access point device 920.

The terminal device 910 may be used to perform the corresponding functions performed by the terminal device in the above-described methods, and the network device 920 may be used to perform the corresponding functions performed by the access point device in the above-described methods, which are not elaborated here for the sake of brevity.

It should be understood that the processor in the embodiments of the disclosure may be an integrated circuit chip having signal processing capability. In implementation, the various operations of the above method embodiments may be accomplished by integrated logic circuit of hardware or instructions in the form of software in a processor. The processor above may include: a general purpose processor, a Digital Signal Processor (DSP), an Application Specific Integrated Circuit (ASIC), a Field Programmable Gate Array (FPGA), or other programmable logic devices, other discrete gate or transistor logic devices, other discrete hardware components. The methods, operations and logic block diagrams disclosed in embodiments of the present disclosure may be implemented or performed. The general purpose processor may be a microprocessor or the processor may be any conventional processor or the like. The operations of the methods disclosed in combination with the embodiments of the present disclosure can be directly embodied as execution of a hardware decoding processor or combined execution of hardware and software modules in the decoding processor. The software module may be located in a Random-Access Memory (RAM), a flash memory, a Read-Only Memory (ROM), a Programmable ROM (PROM) or an Electrically Erasable EPROM (EEPROM), a register and other storage medium mature in the art. The storage medium is located in the memory, and the processor reads information in the memory and completes the operations of the above methods in combination with its hardware.

It is understood that the memory in embodiments of the present disclosure may be volatile memory or non-volatile memory or may include both volatile and non-volatile memory. The non-volatile memory may be an ROM, a PROM, an Erasable PROM (EPROM), an EEPROM, or a flash memory. The volatile memory may be an RAM which serves as an external cache. By way of illustration but not limitation, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include but not be limited to these and any other suitable types of memories.

It should be understood that the memory described above is exemplary but not limiting. For example, the memory in embodiments of the present disclosure may also be a SRAM, a DRAM, a SDRAM, a DDR SDRAM, an ESDRAM, an SLDRAM, a DR RAM, or the like. That is, the memory in embodiments of the present disclosure is intended to include but not be limited to these and any other suitable types of memories.

An embodiment of the disclosure also provides a computer-readable storage medium for storing a computer program.

Optionally, the computer-readable storage medium may be applied to the access point device in the embodiments of the disclosure, and the computer program causes the computer to execute corresponding processes implemented by the access point device in various methods of the embodiments of the present disclosure, which are not elaborated here for the sake of brevity.

Optionally, the computer-readable storage medium may be applied to the station device in the embodiments of the disclosure, and the computer program causes the computer to execute corresponding processes implemented by the station device in various methods of the embodiments of the present disclosure, which are not elaborated here for the sake of brevity.

An embodiment of the disclosure also provides a computer program product including computer program instructions.

Optionally, the computer program product may be applied to the access point device in the embodiments of the disclosure, and the computer program instructions causes the computer to execute corresponding processes implemented by the access point device in various methods of the embodiments of the present disclosure, which are not elaborated here for the sake of brevity.

Optionally, the computer program product may be applied to the station device in the embodiments of the disclosure, and the computer program instructions causes the computer to execute corresponding processes implemented by the station device in various methods of the embodiments of the present disclosure, which are not elaborated here for the sake of brevity.

An embodiment of the disclosure also provides a computer program.

Optionally, the computer program may be applied to the network device in the embodiments of the disclosure, and the computer program causes a computer to execute corresponding processes implemented by the network device in various methods of the embodiments of the present disclosure when the computer program is run on the computer, which are not elaborated here for the sake of brevity.

Optionally, the computer program may be applied to the station device in the embodiments of the disclosure, and the computer program causes a computer to execute corresponding processes implemented by the station device in various methods of the embodiments of the present disclosure when the computer program is run on the computer, which are not elaborated here for the sake of brevity.

Those of ordinary skill in the art would appreciate that the various exemplary units and algorithm operations described in connection with the embodiments in the present disclosure can be implemented in electronic hardware or a combination of computer software and electronic hardware. Whether these functions are performed in hardware or software depends on the specific application and design constraints of the technical solutions. Those of ordinary skill may use different methods for each particular application to implement the described functionality, but such implementation should not be considered outside the scope of the present disclosure.

Those skilled in the art would clearly appreciate that for the specific operating processes of the above-described systems, devices and units, the references may be made to the corresponding processes in the aforementioned method embodiments and would not be repeated herein, for convenience and brevity of description.

In several embodiments provided in the present disclosure, it should be understood that the disclosed systems, devices and methods may be implemented in other ways. For example, the above-described embodiments of the devices are only schematic, for example, the division of the unit is only a logical function division, and in practice, there may be another division method, for example, multiple units or components may be combined or integrated into another system, or some features may be ignored or not performed. Furthermore, the coupling or direct coupling or communication connection between each other illustrated or discussed may be indirect coupling or communication connection through some interfaces, devices or units, and may be electrical, mechanical or other forms.

The units illustrated as separate components may or may not be physically separated, and the components displayed as unit may or may not be physical units, that is, the units and the components may be located in one place, or may be distributed over multiple network units. Part or all of the units can be selected according to the actual needs to achieve the purpose of the embodiments.

In addition, various functional units in the embodiments of the present disclosure may be integrated in one processing unit, or various units may exist physically alone, or two or more units may be integrated in one unit.

The functions may be stored in a computer readable storage medium if implemented in the form of software functional units and sold or used as stand-alone products. In view of this understanding, the technical solutions of the present disclosure in essence, or the part that contributes to the related art, or the part of the technical solutions can be embodied in the form of a software product. The computer software product is stored in a storage medium and includes instructions that enable a computer device (which may be a personal computer, server, network device, or the like) to perform all or part of the operations of the methods described in various embodiments of the present disclosure. The aforementioned storage medium includes a USB flash disk, a removable hard disk, a ROM, a RAM, a magnetic disk or an optical disk and other medium capable of storing program codes.

The above-mentioned is only the specific implementation of the present disclosure, but the scope of protection of the present disclosure is not limited thereto. Any variation or substitution readily conceivable by those skilled in the art within the scope of the technology disclosed in the present disclosure shall be covered by the scope of protection of the present disclosure. Therefore, the scope of protection of the present disclosure should be subject to the scope of protection of the claims.

## Claims

1. A method for wireless communication, comprising:
transmitting, by a station device, a first service using a first resource when a first condition is satisfied, wherein
the first resource is a resource, allocated by an access point device, for transmitting a Physical Layer Protocol Data Unit (PPDU), and
a latency requirement for data carried in the PPDU is lower than a latency requirement for the first service.

2. The method of claim 1, wherein the first resource comprises a first time domain resource, and transmitting, by the station device, the first service using the first resource comprises:
transmitting, by the station device, the first service using part of the first time domain resource.

3. The method of claim 2, wherein the first time domain resource comprises X time domain resource units, where X is a positive integer.

4. The method of claim 3, wherein the first time domain resource comprises N time domain symbols, and each of the time domain resource units comprises at least one time domain symbol.

5. The method of claim 3 or 4, wherein the time domain resource unit has an identical size for different station devices.

6. The method of claim 3 or 4, wherein a size of the time domain resource unit is related to a bandwidth of the PPDU allocated by the access point device.

7. The method of claim 3 or 4, wherein a size of the time domain resource unit is related to a size of a frequency domain resource in the first resource.

8. The method of any one of claims 2 to 7, wherein a length of the first time domain resource is greater than or equal to a first length threshold.

9. The method of any one of claims 2 to 8, further comprising:
transmitting, by the station device, a first signal using part of the first time domain resource, wherein the first signal is used for indicating that the first service is transmitted on the first resource.

10. The method of claim 9, wherein the first signal is a first sequence.

11. The method of claim 10, wherein the first sequence is predefined or the first sequence is configured by the access point device.

12. The method of any one of claims 9 to 11, wherein the first signal is transmitted on last K time domain symbols in a time domain resource unit of the first time domain resource, where K is a positive integer.

13. The method of claim 12, wherein when an arrival time of the first service is before the last K time domain symbols in the time domain resource unit, the first signal is transmitted on the last K time domain symbols in the time domain resource unit; or
when an arrival time of the first service is within the last K time domain symbols in the time domain resource unit, the first signal is transmitted on last K time domain symbols in a next time domain resource unit of the time domain resource unit.

14. The method of any one of claims 9 to 11, wherein the first signal occupies K time domain symbols in the first time domain resource, where K is a positive integer.

15. The method of claim 14, wherein the first service is transmitted after the K time domain symbols occupied by the first signal.

16. The method of any one of claims 1 to 15, wherein the first condition is satisfied, which comprises at least one of:
the access point device allows the station device to transmit the first service using the resource for transmitting the PPDU; or
remaining resources in the first resource are sufficient to transmit the first signal and the first service when the first service arrives.

17. The method of claim 15, wherein the remaining resources in the first resources are sufficient to transmit the first signal and the first service comprises:
when an arrival time of the first service is before last K time domain symbols in a time domain resource unit, time domain resource unit(s) after the time domain resource unit are sufficient to transmit the first service; or
when an arrival time of the first service is within last K time domain symbols in a time domain resource unit, time domain resource unit(s) after a next time domain unit of the time domain resource unit are sufficient to transmit the first service.

18. The method of any one of claims 1 to 17, further comprising:
receiving, by the station device, first indication information transmitted by the access point device, wherein the first indication information is used for indicating whether the station device is allowed to transmit the first service using the resource for transmitting the PPDU.

19. The method of claim 18, wherein the first indication information is transmitted through a trigger frame.

20. The method of claim 19, wherein the first indication information is carried in a common information field of the trigger frame.

21. The method of claim 19, wherein the first indication information is carried in a user information field of the trigger frame.

22. The method of any one of claims 19 to 22, wherein the trigger frame is used for triggering transmission of the PPDU or for an Uplink (UL) Orthogonal Frequency Division Multiple Access (OFDMA) based Random Access (UORA).

23. A method for wireless communication, comprising:
transmitting, by an access point device, first indication information to a station device, wherein the first indication information is used for indicating whether the station device is allowed to transmit a first service using a resource for transmitting a Physical Layer Protocol Data Unit (PPDU).

24. The method of claim 23, wherein the first indication information is transmitted through a trigger frame.

25. The method of claim 24, wherein the first indication information is carried in a common information field of the trigger frame.

26. The method of claim 25, wherein the first indication information is carried in a user information field of the trigger frame.

27. The method of any one of claims 24 to 26, wherein the trigger frame is used for triggering transmission of the PPDU or for an Uplink (UL) Orthogonal Frequency Division Multiple Access (OFDMA) based Random Access (UORA).

28. The method of any one of claims 23 to 27, further comprising:
determining, by the access point device, whether the station device transmits the first service on a first resource based on whether a first signal is received on the first resource, wherein
the first resource is a resource, allocated by the access point device, for transmitting the PPDU, and
a latency requirement for data carried in the PPDU is lower than a latency requirement for the first service.

29. The method of claim 28, wherein determining, by the access point device, whether the station device transmits the first service on the first resource based on whether the first signal is received on the first resource comprises:
when the first signal is received on the first resource, determining that the station device transmits the first service on the first resource; or
when the first signal is not received on the first resource, determining that the station device does not transmit the first service on the first resource.

30. The method of claim 28 or 29, wherein the first resource comprises a first time domain resource, and the first time domain resource comprises X time domain resource units, where X is a positive integer.

31. The method of claim 30, wherein the first time domain resource comprises N time domain symbols, and each of the time domain resource units comprises at least one time domain symbol.

32. The method of claim 30 or 31, wherein a length of the first time domain resource is greater than or equal to a first length threshold.

33. The method of any one of claims 30 to 32, wherein the time domain resource unit has an identical size for different station devices.

34. The method of any one of claims 30 to 32, wherein a size of the time domain resource unit is related to a bandwidth of the PPDU allocated by the access point device.

35. The method of any one of claims 30 to 32, wherein a size of the time domain resource unit is related to a size of a frequency domain resource in the first resource.

36. The method of any one of claims 30 to 35, wherein the first signal is transmitted on last K time domain symbols in a time domain resource unit.

37. The method of any one of claims 30 to 36, wherein the first service is transmitted on time domain resource unit(s) after a time domain resource unit on which the first signal is located.

38. The method of any one of claims 30 to 35, wherein the first signal occupies K time domain symbols in the first time domain resource.

39. The method of claim 38, wherein the first service is transmitted after the K time domain symbols occupied by the first signal.

40. The method of any one of claims 29 to 39, wherein the first signal is a first sequence.

41. A station device, comprising:
a communication unit, configured to transmit a first service using a first resource when a first condition is satisfied, wherein
the first resource is a resource, allocated by an access point device, for transmitting a Physical Layer Protocol Data Unit (PPDU), and
a latency requirement for data carried in the PPDU is lower than a latency requirement for the first service.

42. An access point device, comprising:
a communication unit, configured to transmit first indication information to a station device, wherein the first indication information is used for indicating whether the station device is allowed to transmit a first service using a resource for transmitting a Physical Layer Protocol Data Unit (PPDU).

43. A station device, comprising a processor and a memory, wherein
the memory is configured to store a computer program; and
the processor is configured to call the computer program stored in the memory and run the computer program to perform the method of any one of claims 1 to 22.

44. An access point device, comprising a processor and a memory, wherein
the memory is configured to store a computer program; and
the processor is configured to call the computer program stored in the memory and run the computer program to perform the method of any one of claims 23 to 40.

45. A chip, comprising a processor configured to call a computer program from a memory and run the computer program to cause a device installed with the chip to perform the method of any one of claims 1 to 22 or any one of claims 23 to 40.

46. A computer readable storage medium for storing a computer program that causes a computer to perform the method of any one of claims 1 to 22 or any one of claims 23 to 40.

47. A computer program product comprising computer program instructions that cause a computer to perform the method of any one of claims 1 to 22 or any one of claims 23 to 40.

48. A computer program for causing a computer to perform the method of any one of claims 1 to 22 or any one of claims 23 to 40.
